(19) **Europäisches Patentamt / European Patent Office / Office européen des brevets**

(11) **EP 4 305 446 B1**

(12) **FASCICULE DE BREVET EUROPEEN**

(45) Date de publication et mention de la délivrance du brevet:
**08.04.2026 Bulletin 2026/15**

(21) Numéro de dépôt: **22712912.9**

(22) Date de dépôt: **04.03.2022**

(51) Classification Internationale des Brevets (IPC):
**G01S 7/02** *(2006.01)*

(52) Classification Coopérative des Brevets (CPC):
**G01S 7/021**

(86) Numéro de dépôt international:
**PCT/EP2022/055597**

(87) Numéro de publication internationale:
**WO 2022/189298 (15.09.2022 Gazette 2022/37)**

(54) **PROCÉDÉ DE DÉSENTRELACEMENT RAPIDE ET ROBUSTE DE TRAINS D'IMPULSIONS**

VERFAHREN ZUR SCHNELLEN UND ROBUSTEN ENTSCHACHTELUNG VON IMPULSFOLGEN

METHOD FOR FAST AND ROBUST DEINTERLEAVING OF PULSE TRAINS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2021 FR 2102390**

(43) Date de publication de la demande:
**17.01.2024 Bulletin 2024/03**

(73) Titulaire: **THALES**
**92190 Meudon (FR)**

(72) Inventeurs:
• **GRANDIN, Jean-François**
**78851 ELANCOURT (FR)**
• **LEMOINE, Jean-Marie**
**78851 ELANCOURT (FR)**
• **BILLET, Aurel**
**78851 ELANCOURT (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 309 289    US-A1- 2015 263 872**

• **XI YIN ET AL: "A Fast and Real-time PRI Transform Algorithm for Deinterleaving Large PRI Jitter Signals", 2018 37TH CHINESE CONTROL CONFERENCE (CCC), TECHNICAL COMMITTEE ON CONTROL THEORY, CHINESE ASSOCIATION OF AUTOMATION, 25 July 2018 (2018-07-25), pages 4465 - 4469, XP033414663, DOI: 10.23919/CHICC.2018.8483497**

**Description**

**Domaine technique :**

L'invention se situe dans le domaine de l'analyse de signaux radar, et porte plus particulièrement sur le désentrelacement d'impulsions radars interceptées par un capteur ESM (sigle anglais pour *Electronic Support Measures,* ou mesures de soutien électronique), ELINT (acronyme anglais pour *ELectronic INTelligence, ou intelligence électronique*) ou autre, quel que soient les modèles de formes d'ondes (FO) utilisés et leurs paramètres.

**Technique antérieure :**

Les capteurs d'émissions radar reçoivent des trains d'impulsions (séries d'impulsions) provenant de diverses sources d'émissions radar reçues au-dessus de leur seuil de sensibilité. Ces trains d'impulsions sont « entrelacés », les émissions provenant de différents radars étant simultanément présentes. Ces situations de mélanges (entrelacement de trains d'impulsions) sont d'autant plus fréquentes que :

- la sensibilité du capteur est élevée, ce qui induit une augmentation de la densité des impulsions détectées,

- les émissions agiles étalent leurs impulsions sur le spectre, ce qui augmente la probabilité de trouver des impulsions de plusieurs radars à une fréquence donnée.

Pour traiter ces situations, le dispositif d'extraction d'impulsions doit en tout premier lieu isoler chaque émission d'intérêt pour pouvoir ensuite l'analyser et la caractériser. On parle de « désentrelacement » des impulsions.

Un des paramètres permettant de caractériser les signaux reçus est l'intervalle de répétition des impulsions (PRI pour *Pulse Repetition Interval*). Cette PRI dépend de la forme d'onde. Il existe par exemple des radars à modulation constante (pour lesquels la PRI est constante), à modulation aléatoire (en anglais *jitter,* pour lesquels la PRI est soumise à des variations aléatoires), à modulation wobulée (en anglais *wobulated,* pour lesquels la PRI varie selon un motif précis comme par exemple un sinus ou un triangle), à modulation commutée (en anglais *switched,* pour lesquels la PRI commute entre un nombre fixe de valeurs), à modulation décalée (en anglais *staggered,* pour lesquels des séquences d'impulsions sont émises avec des PRI constantes mais pour différents moments d'émission), etc. , ...

De nombreuses techniques de désentrelacement des impulsions sont connues, basées sur les caractéristiques primaires des impulsions, déterminables sur une impulsion isolée, et/ou les caractéristiques secondaires des impulsions, déterminables à partir de deux impulsions :

- les techniques de classification basées sur les paramètres primaires prépondérants des impulsions, tels que la direction d'arrivée (DOA pour *Direction Of Arrival*), la fréquence des impulsions (RF pour *RadioFrequency*), la durée des impulsions (DI, ou PW pour *Pulse Width* en anglais), l'amplitude des impulsions (PA pour *Pulse Amplitude*), les instants d'arrivée des impulsions (TOA pour *Time of Arrival*), la polarisation des impulsions, les paramètres intra-impulsion (*Intrapulse* en anglais, modèle liant phase et fréquence), etc., ... ;

- les techniques de classification basées sur les paramètres secondaires prépondérants des impulsions, c'est-à-dire les informations transportées par des couples d'impulsions, tels que la différence entre les instants d'arrivée des impulsions (DTOA pour *Difference of Time of Arrivals,* liés à la PRI), la différence entre les fréquences de réception des impulsions (DRF pour *Difference pulse to pulse RF*), la cohérence de phase entre les impulsions, etc., ...

Les techniques de classifications basées sur des paramètres primaires prépondérants, tel que décrit par exemple dans l'article de Wilkinson D.R. et Watson A.W. « Use of metric techniques in ESM data processing », IEE Proceedings F, vol 132 N°7, pp. 27-36, 1985, ou dans celui de H. K. Mardia, « Adaptive multi-dimensional clustering for ESM », IEE Colloquium on « Signal processing for ESM systems », 1988, visent à répartir les impulsions dans des groupes d'impulsions (clusters) ayant une grande proximité intra-groupe et une faible proximité intergroupe.

Elles peuvent être basées sur une approche divisive visant à former des clusters homogènes en veillant à ne pas éclater des formes d'onde entre différents clusters puis à scinder chaque cluster par une technique utilisant un HDTOA (Histogramme des Différences de TOA), ou sur une approche agglomérative visant à former des clusters homogènes et purs dans lesquels il n'y a qu'une seule forme d'onde, éventuellement éclatée sur différents clusters, puis à regrouper les clusters correspondant à la même forme d'onde.

Ces techniques présentent cependant certains défauts :

- les paramètres utiles au désentrelacement peuvent souffrir de perturbations. Par exemple, les réflexions sur des structures de l'environnement de propagation provoquent des interférences entre le signal direct et le signal réfléchi qui perturbent fortement les mesures de durée des impulsions. En marine, il est notoire que les mesures sont perturbées par les réflexions sur la mer ;

- le paramètre le plus fiable est la DOA, mais certains capteurs ne la mesurent pas, ou ne la mesurent qu'avec des écarts types élevés (5° à 30°) ne permettant pas de discriminer finement les directions d'arrivée ;

- les paramètres de modulation intra-impulsion ne sont pas toujours mesurables avec une bonne qualité, selon le capteur utilisé et le filtrage réalisé. Il existe même des récepteurs pour lesquels les mesures de modulation intra-impulsion ne sont pas réalisées ou ne le sont que de temps à autre sur des impulsions bien choisies ;

- elles partent de la supposition que les valeurs primaires sont constantes au sein de chaque groupe (cluster) d'impulsions extrait, ce qui est vrai pour un grand nombre de radars, mais pas systématique. Il existe par exemple des radars pour lesquels la fréquence varie par exemple d'impulsion à impulsion ou de train d'impulsions à train d'impulsions dans un large domaine, par exemple 2 GHz.

En outre, la généralisation de l'agilité impulsion à impulsion et de l'agilité par trains des formes d'onde dans les signaux radars actuels rend difficile, voire caduque, cette démarche. En effet, dans un environnement dense, il apparaît impossible dans certains secteurs angulaires de séparer deux émissions agiles inconnues par un simple tri fréquentiel sur des fourchettes de valeur, même avec un capteur de bonne résolution. En effet, soit les fourchettes sont larges et on obtient un mélange des 2 émissions, soit les fourchettes sont trop fines et on décompose chaque émission en une myriade de clusters d'impulsions monofréquence.

Des techniques de désentrelacement de trains d'impulsions sont décrites dans le brevet EP 2.309.289 A1, la demande de brevet US 2015/263872 A1, et l'article de Xin et al. « A fast and real-time PRI transformation algorithm for deinterleaving Large PRI jitter signals", 2018 37th Chinese control conference, technical committee on control theory, Chinese association of automation.

La demande de brevet EP 3.505.949 A1 répond au problème du désentrelacement de signaux émis par des radars agiles et par des méthodes de recombinaison des groupes d'impulsions issus de tris monofréquence (et éventuellement en DOA). L'idée est de former des groupes d'impulsions sur paramètres primaires, puis de les regrouper à l'aide des caractéristiques primaires des groupes d'impulsions. Cependant, cette technique :

- n'exploite pas conjointement tous les paramètres,

- n'est pas adapté à des cas de fortes agilités,

- ne permet pas d'atteindre des performances optimales en matière de séparation (de phases notamment),

- n'utilise pas les DTOAs dans la métrique du regroupement primaire.

Le problème de désentrelacement des impulsions transmises par des radars agiles peut également être résolu en utilisant une technique de classification basée sur des paramètres secondaires prépondérants, en particulier le DTOA qui est une caractéristique très discriminante et faiblement bruitée. Un article de H.K. Mardia, « New techniques for the deinterleaving of repetitive sequences », IEE Proceedings F, vol 136 N°4, pp. 149-154, August 1989 décrit de telles méthodes de désentrelacement basées sur le DTOA. Les techniques de classification sur paramètres secondaires prépondérants sont applicables sur la plupart des émissions radar, puisque la très grande majorité des radars à impulsions utilisent des trains d'impulsions dont le DTOA est répétitif.

La plupart des algorithmes de désentrelacement sur des paramètres secondaires construisent des histogrammes de DTOAs (HDTOA) afin d'isoler des DTOA signants dans un mélange de formes d'ondes, puis d'extraire les impulsions correspondantes. C'est le cas par exemple dans l'article de Mardia mentionné précédemment. La construction d'un histogramme de DTOA se fait généralement en distinguant les DTOA suivant leur ordre.

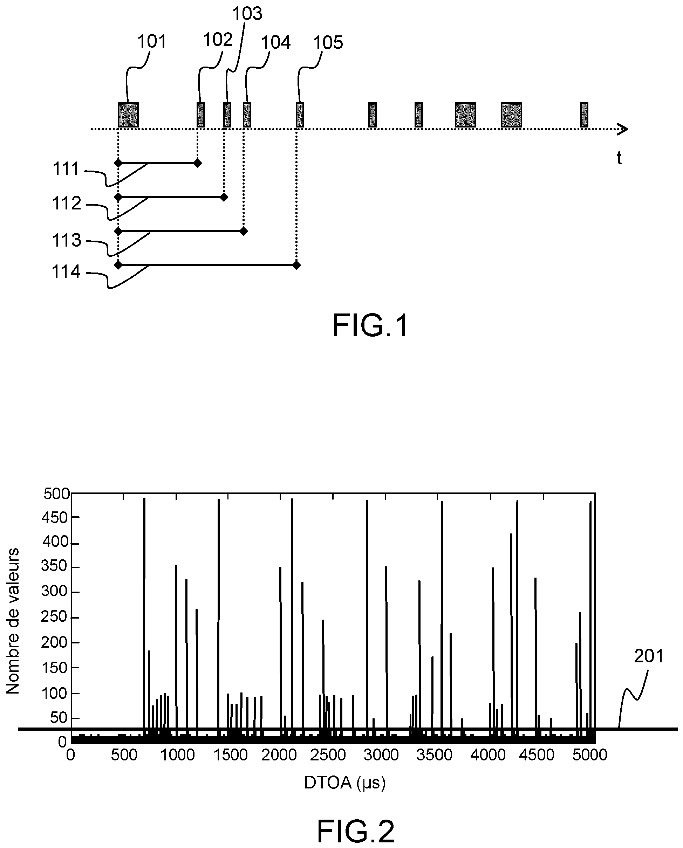

La figure 1 illustre la notion d'ordre de DTOA. Pour une série d'impulsions 101 à 105 reçues par un capteur et correspondant à un ou plusieurs signaux radars, un DTOA d'ordre 1 est la différence de temps entre une impulsion et l'impulsion suivante, par exemple la différence 111 entre l'impulsion 101 et l'impulsion 102. Un DTOA d'ordre 2 correspond à la différence de temps entre une impulsion et la deuxième impulsion suivante, par exemple la différence 112 entre l'impulsion 101 et l'impulsion 103. De manière équivalente, les DTOA 113 et 114 correspondent à un DTOA d'ordre 3 et d'ordre 4 pour l'impulsion 101.

Pour un ensemble d'impulsions provenant d'une source unique d'émission, la considération des écarts (DTOA) de temps d'ordre 1 est suffisante pour faire apparaître les PRIs. Si l'ensemble d'impulsions provient de plusieurs sources, il est nécessaire de calculer des écarts d'ordre supérieur pour faire apparaître les PRIs de chaque émission. L'ordre des DTOA devant être calculé est donc directement lié à la sévérité du mélange à traiter.

Parmi les DTOA calculés, il convient de distinguer ceux qui correspondent à des impulsions provenant d'un même émetteur, appelés écarts d'intra-action, et ceux calculés entre des impulsions provenant d'émissions distinctes, encore appelés écarts d'interaction. Les écarts d'interaction se répartissent uniformément, et il est possible de prédire leur niveau maximal sans connaissance préalable de la sévérité du mélange, afin de positionner un seuil d'interactions dans un histogramme de DTOA pour rejeter les DTOA correspondant à des écarts d'interaction et isoler sans aucune fausse alarme les PRI significatives dans des mélanges sévères d'émissions entrelacées.

La figure 2 représente un histogramme de DTOA réalisé à partir d'impulsions provenant de plusieurs sources. Le seuil de détection 201 permet d'isoler les pics significatifs et de supprimer les écarts d'interaction. Ce seuil de détection peut être déterminé à partir de la densité impulsionnelle par exemple en prenant un seuil $\overline{B}$ égal à $\dfrac{n^2}{2}$ avec $n$ le nombre total d'impulsions.

Les algorithmes de désentrelacement sur paramètres secondaires prépondérants, en particulier ceux basés sur des histogrammes de DTOA, permettent ainsi de détecter les émissions cyclo-stationnaires. Ces émissions présentent une PRI, mais également une Période de Répétition de Motif (PRM).

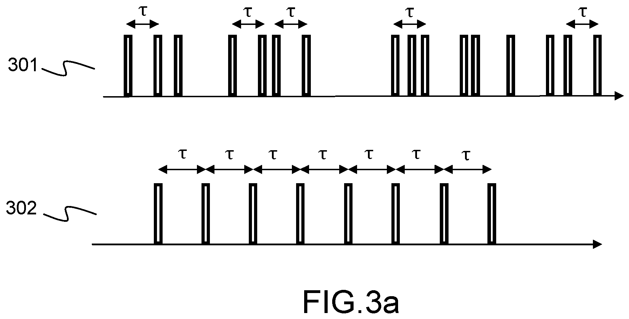

Il convient de faire la différence entre un DTOA répétitif et un DTOA périodique. La figure 3a représente en 301 une série d'impulsions présentant un DTOA $\tau$ répétitif et non périodique. A l'inverse, une série d'impulsions présentant un DTOA périodique est représenté en 302. Par la suite, on appellera sous-PRM ou PRM locale un DTOA périodique.

Une série d'impulsions peut présenter plusieurs sous-PRM périodiques. Par exemple, un radar de type stagger 2 présente deux motifs périodiques de même sous-PRM DTOA1 et DTOA2 respectivement associés à deux phases (instants d'émissions) différents. Il présente également une PRM globale ou une sous-PRM valant DTOA1+DTOA2.

Il est également possible d'avoir un motif dans lequel les impulsions présentent un grand nombre (par exemple 200) de DTOA non identiques, et qui se répète à l'infini. La somme de ces DTOA correspond alors à une PRM ou une PRM globale, et le signal est dit cyclostationnaire. Les algorithmes de désentrelacement utilisant des histogrammes de DTOA utilisent la propriété de répétition d'un DTOA répétitif, mais n'utilisent pas son caractère périodique quand il existe.

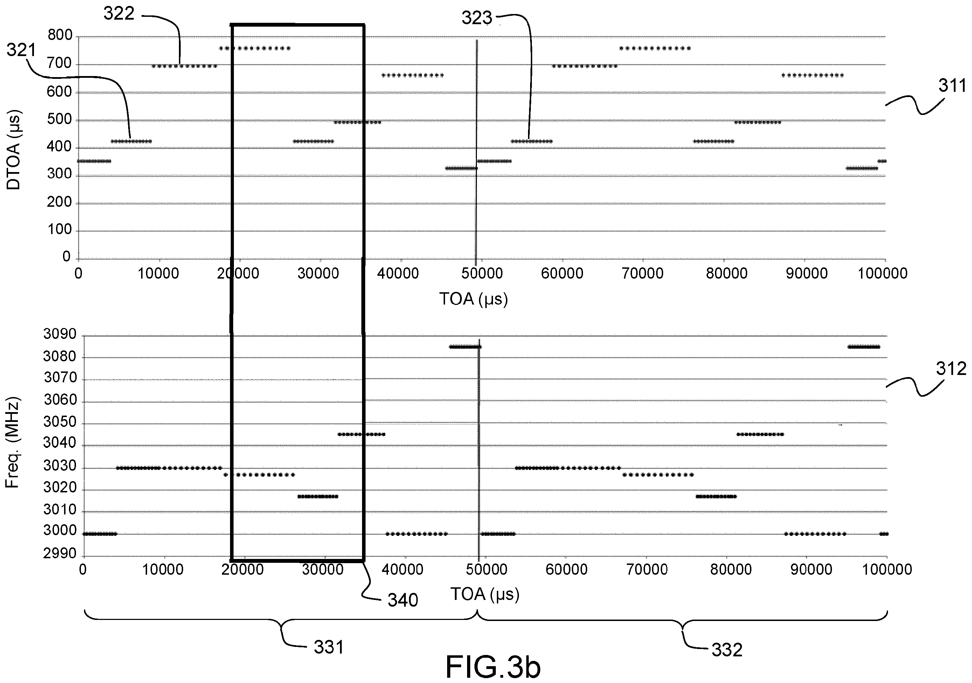

La figure 3b représente un train d'impulsions émis par un signal radar sur une fenêtre d'analyse de 100 ms. Le graphique 311 représente les DTOA d'ordre 1 mesurées par rapport au TOA, tandis que le graphique 312 représente les fréquences RF sur lesquelles sont reçues les impulsions. Les signaux reçus comportent de nombreux paliers à DTOA constants et périodiques 321, 322 ou 323, qui constituent chacun une sous-PRM, c'est-à-dire un motif répétitif et périodique local limité au palier. Les paliers sont eux-mêmes transmis selon un motif 331 ou 332 répétitif et périodique, correspondant à une PRM globale.

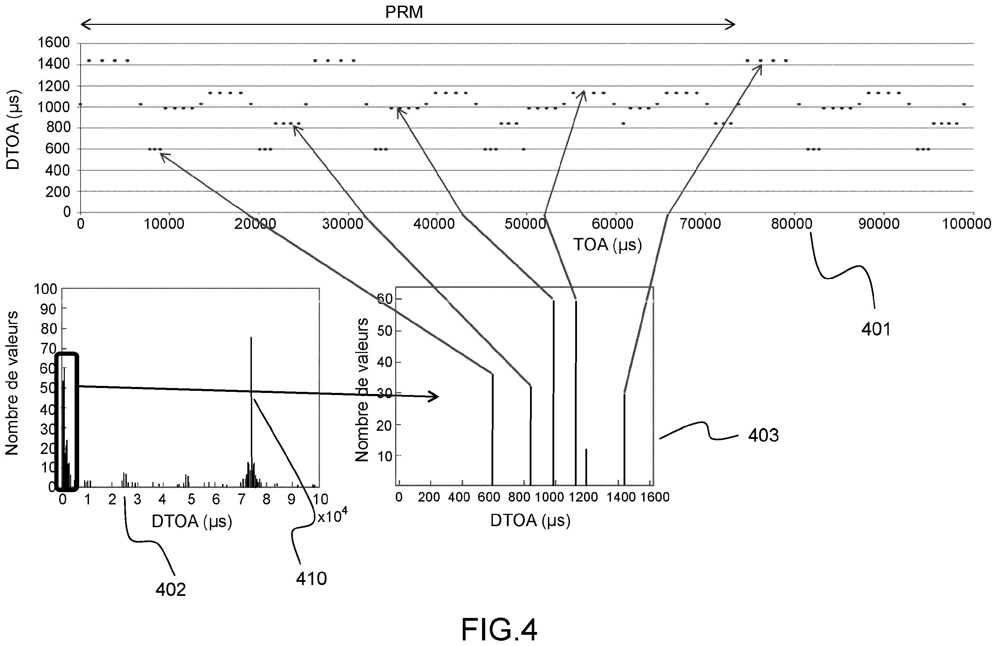

La figure 4 permet de faire le lien entre histogramme de DTOA, SPRM et PRM.

Le graphique 401 représente, sur une fenêtre d'analyse de 100 ms, les DTOA d'ordres élevés mesurées sur un signal radar dont la PRI est variable. Le graphique 402 représente l'histogramme des DTOA correspondant. Les PRI les plus faibles correspondent aux sous-PRM de l'émission, tandis que la PRI la plus élevée 410 correspond à la PRM du signal radar. Le graphique 403 représente un zoom sur les sous-PRM, après seuillage, qui peuvent être directement reliées aux paliers d'impulsions.

Les algorithmes de HDTOA permettent donc de détecter les émissions cyclo-stationnaires (en pratique toutes les modulations : jitter, wobulation, stagger, commutations) sur la base d'histogrammes de différences de temps d'arrivée entre impulsions. Des algorithmes connus décrivent des méthodes d'association des impulsions reçues dans des trains associés à une PRI particulière. C'est le cas par exemple du brevet Européen FR 3.051.611 B1, qui forme des trains d'impulsions en associant les impulsions ayant une PRI proche, puis regroupe les trains d'impulsions formés à partir de critères primaires (fréquence, direction d'arrivée, etc, ...). L'association des impulsions ayant une PRI proche permet par exemple, pour un radar de type stagger, de former un train d'impulsions unique. Cependant, les mesures de PRI sont bruitées et ont une précision relative. L'utilisation du critère de PRI seul pour former les trains d'impulsions peut alors entrainer des erreurs, par exemple en associant au sein d'un train d'impulsions des signaux ayant des PRI proches mais provenant de sources distinctes.

Les algorithmes de désentrelacement sur critères secondaires prépondérants selon l'état de l'art n'ont donc pas des performances optimales et sont perfectibles.

Enfin, il est connu des procédés de désentrelacement d'impulsions dits « vectoriels » où le désentrelacement se fait à partir d'une description vectorielle des impulsions. Cette description est générée à partir d'histogrammes de mesures primaires et de mesures secondaires. En particulier, on utilise un histogramme des différences de temps d'arrivée (DTOA).

L'avantage est d'utiliser simultanément l'ensemble des paramètres primaires ou secondaires. La méthode définit une note de proximité entre impulsions à partir de l'ensemble des paramètres primaires et secondaires. Cette méthode est particulièrement efficace pour désentrelacer des mélanges denses d'impulsions radar tels que ceux rencontrés dans les systèmes ELINT à très haute sensibilité et écoute longue. Une méthode de désentrelacement vectoriel est décrite dans le brevet Européen EP 3.049.822 B1.

Les méthodes vectorielles sont donc supérieures à toutes les méthodes classiques de désentrelacement par caractéristiques primaires ou secondaires prépondérantes, car elles emploient tous les paramètres et toutes les données dans un critère optimisé, et sont adaptées en particulier pour l'extraction des formes d'ondes cyclo-stationnaires. Elles sont particulièrement efficaces pour désentrelacer des mélanges denses d'impulsions radar tels que ceux rencontrés dans les systèmes ELINT à très haute sensibilité et écoute longue. Cependant, pour des écoutes courtes avec une sensibilité moyenne, le problème de désentrelacement à résoudre est très souvent moins complexe puisqu'il y a un mélange limité de formes d'ondes. Dans ces cas-là, ces méthodes sont trop complexes, et donc trop couteuses à mettre en œuvre puisqu'elles requièrent le calcul des DTOA à des ordres très élevés.

Un but du procédé de désentrelacement d'impulsions selon l'invention est de palier aux défauts de l'état de l'art par un procédé de désentrelacement plus rapide et moins complexe que les méthodes de désentrelacement vectorielles, pouvant être mis en œuvre sur une fenêtre d'observation réduite, et permettant d'atteindre le même niveau de performances que le désentrelacement vectoriel avec un coût mémoire et un coût de calcul inférieur. Le procédé décrit vise également à obtenir des performances meilleures que celles des procédés de désentrelacement basés sur les paramètres primaires et secondaires prépondérants des impulsions connus de l'état de l'art. Il peut en outre être mis en œuvre sur des capteurs de sensibilité moyenne.

**Résumé de l'invention :**

A cet effet, l'invention décrit un procédé de désentrelacement d'une série d'impulsions comprenant :

- une étape de réception d'une série d'impulsions,

- une étape de détermination de périodes de répétition de motifs et de phases associées aux impulsions, par construction d'un histogramme de différence de temps d'arrivées entre les impulsions, et de regroupement des impulsions dans des trains d'impulsions à période de répétition de motif et phase sensiblement constantes,

- une étape de caractérisation des paramètres des trains d'impulsions,

- une étape de formation de groupes de trains d'impulsions à partir des paramètres des trains d'impulsions.

Avantageusement, l'étape de détermination de périodes de répétition de motifs et de phases associées aux impulsions comprend l'application d'une contrainte de proximité sur des paramètres primaires des impulsions.

Selon divers modes de réalisation du procédé de désentrelacement, l'étape de caractérisation des paramètres des trains d'impulsions comprend la mesure d'un ou plusieurs paramètres à partir de l'ensemble des impulsions du train d'impulsions parmi lesquels une période de répétition de motif, une phase, une direction d'arrivée, une ou plusieurs fréquences de réception, une amplitude et une ou plusieurs durées d'impulsions.

Avantageusement, l'étape de caractérisation des paramètres des trains d'impulsions comprend le calcul d'une période de répétition de motif associée au train d'impulsions selon la formule :

$$\hat{\tau} = \sum_{i=1}^{n} \frac{6(2k(i) - k(n) - 1)}{k(n)(k(n)^2 - 1)} t_i$$

avec $\hat{\tau}$ la période de répétition de motif associée au train d'impulsions, $k(i)$ un indice entier de l'impulsion $i$ dans le train d'impulsion, $t_i$ l'instant d'arrivée de l'impulsion $i$ et $n$ le nombre d'impulsions du train d'impulsions.

Selon un mode de réalisation du procédé de désentrelacement, l'étape de formation de groupes de trains d'impulsions comprend la mesure de distances entre les paramètres des trains d'impulsion.

Selon un mode de réalisation du procédé de désentrelacement, l'étape de formation de groupes de trains d'impulsions comprend l'application de règles de regroupement entre les trains d'impulsions permettant d'associer des séries d'impulsions formant des ponts de DTOA et/ou des séries d'impulsions interrompues.

Selon un mode de réalisation, le procédé de désentrelacement comprend en outre une étape de regroupement à partir de caractéristiques primaires des impulsions n'ayant pas été associées à des trains d'impulsions lors de l'étape de regroupement des impulsions dans des trains d'impulsions à période de répétition de motif et phase sensiblement constantes.

Selon un mode de réalisation, le procédé de désentrelacement comprend en outre une étape de caractérisation des paramètres des groupes de trains d'impulsions et de pistage des impulsions.

L'invention porte également sur un dispositif comprenant :

- des moyens de réception, d'acquisition et de numérisation de signaux radiofréquence,
- des moyens de traitement numérique des signaux reçus configurés pour mettre en œuvre un procédé de désentrelacement d'impulsions selon un mode de réalisation de l'invention.

Elle porte également sur un programme d'ordinateur comprenant des instructions de code de programme pour l'exécution du procédé selon un mode de réalisation de l'invention lorsque ledit programme est exécuté sur un ordinateur.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :

- la figure 1 illustre la notion de différence entre instants d'arrivée à différents ordres ;

- la figure 2 représente un histogramme de DTOA réalisé à partir d'impulsions provenant de plusieurs sources ;

- la figure 3a représente une série d'impulsions présentant des DTOA répétitifs et une série d'impulsions présentant des DTOA périodiques ;

- la figure 3b représente un train d'impulsions émis par un signal radar sur une fenêtre d'analyse de 100 ms ;

- la figure 4 représente un train d'impulsions émis par un signal radar permettant de faire le lien entre histogramme de DTOA, SPRM et PRM ;

- la figure 5 représente un dispositif configuré pour implémenter un procédé de désentrelacement d'impulsions selon un mode de réalisation de l'invention ;

- la figure 6 représente les différentes étapes d'un procédé de désentrelacement d'une série d'impulsions selon un mode de réalisation de l'invention ;

- la figure 7 représente un graphique de DTOA associés à une série d'impulsions, ainsi que l'histogramme correspondant ;

- la figure 8 illustre la mise en œuvre d'un procédé de désentrelacement d'impulsions selon un mode de réalisation de l'invention sur un signal radar de type stagger 3/3 ;

- la figure 9 représente les étapes d'un mode de réalisation particulier du procédé de désentrelacement selon l'invention ;

- la figure 10 représente des impulsions reçues par un capteur ESM en provenance de plusieurs sources ;

- la figure 11 représente un graphique de DTOA construit à partir des impulsions de la figure 10, ainsi que l'histogramme associé ;

- la figure 12 représente les différents plots formés par le procédé de désentrelacement selon l'invention sur les impulsions de la figure 10.

Des références identiques peuvent être utilisées dans des figures différentes lorsqu'elles désignent des éléments identiques ou comparables.

**Description détaillée :**

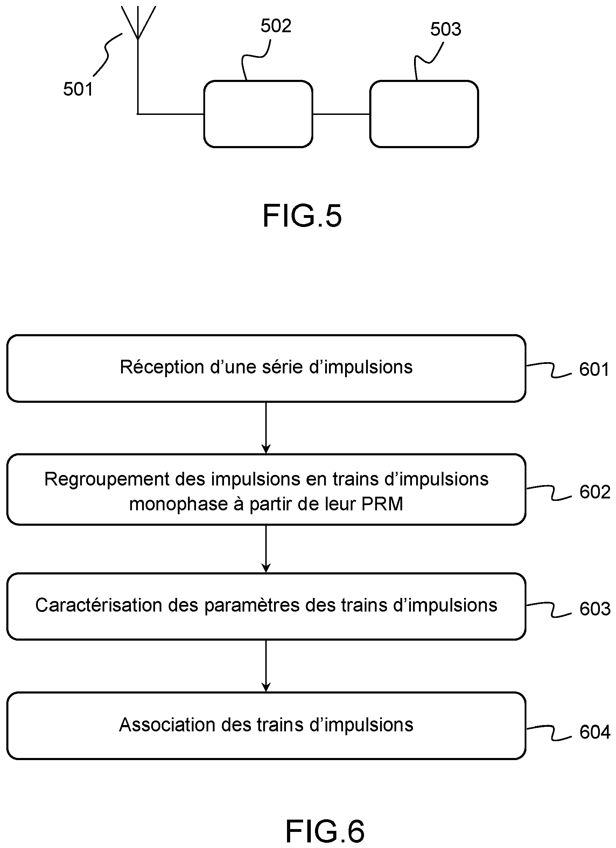

L'objet de l'invention porte sur un procédé de désentrelacement d'impulsions reçues par un capteur ESM, ELINT ou tout autre dispositif de traitement du signal.
Il peut par exemple être implémenté par un dispositif tel que celui représenté à la figure 5 comprenant :

- une antenne 501, configurée pour recevoir des signaux radiofréquence dans une bande de fréquence donnée, de préférence large bande. Avantageusement, l'antenne peut être une antenne directive, ou un réseau d'antennes adaptable électroniquement de manière à faire varier son gain et/ou sa direction de pointage,

- un dispositif 502 d'acquisition et de numérisation de signaux, configuré pour acquérir, traiter et numériser les signaux reçus sur l'antenne de manière à les transposer sur une fréquence de fonctionnement donnée, les filtrer et les convertir dans un format exploitable par un dispositif de traitement numérique,

- un dispositif de traitement numérique 503 disposant d'une mémoire permettant de stocker les instructions nécessaires à la mise en œuvre du procédé selon l'invention et de mémoriser les données acquises par le capteur ESM, et de moyens de calcul tel qu'un processeur, un processeur de signal numérique (plus connu sous le sigle anglais de DSP pour *Digital Signal Processor*), ou un circuit spécialisé tel qu'un ASIC (acronyme anglais pour *Application Specific Integrated Circuit*) ou un FPGA (sigle anglais pour *Field-Programmable Gate Array*), configuré pour mettre en œuvre le procédé selon l'invention. Le dispositif de traitement numérique peut être relié à n'importe quel dispositif permettant d'exploiter les résultats obtenus par la mise en œuvre du procédé selon l'invention, tel que par exemple un écran, une imprimante, un port matériel ou logiciel, ou autre.

La figure 6 présente les différentes étapes d'un procédé de désentrelacement d'une série d'impulsions selon un mode de réalisation de l'invention.

Il comprend une première étape 601 de réception d'une série d'impulsions sur une fenêtre d'analyse. Les signaux reçus ou les impulsions associées à leurs caractéristiques (instant d'arrivée, durée de l'impulsion, fréquence de réception, amplitude, direction d'arrivée lorsque cette information est disponible, etc, ...) sont enregistrées de manière à pouvoir être exploitées lors des étapes ultérieures.

Le procédé selon l'invention comprend une deuxième étape 602 de regroupement des impulsions dans des trains d'impulsions monophases en fonction de leur période de répétition de motif, local ou global. En effet, une très grande majorité des formes d'ondes radar présentent des trains d'impulsions périodiques. Cette périodicité n'est exploitée par les procédés de désentrelacement de l'état de l'art, qui recherchent des motifs répétitifs sans considérer la périodicité de ces motifs.

Cette étape est donc réalisée en considérant les propriétés de cyclostationnarité locale et globale des trains d'impulsions reçus, qui s'expriment sous la forme :

$$t_i = (i - 1)\tau + \phi + v_i, \forall i \in \{1, ..., n\}$$

avec :

- $t_i$ l'impulsion d'indice *i* d'un train d'impulsions,

- $\tau$ la période de répétition de motif locale (sous-PRM) ou globale (PRM) du train d'impulsions,

- $\phi$ la phase associée au train d'impulsions,

- $v_i$ la variance de l'instant d'arrivée de l'impulsion d'indice *i*,

- *n* le nombre d'impulsions du train d'impulsions.

L'étape 602 consiste à regrouper les impulsions par trains d'impulsions associés à une même phase à partir d'estimées de la période de répétition de motif. Elle comprend :

- l'extraction des PRM (ou SPRM) par un algorithme de détection des PRM (SPRM) associées à chaque impulsion, sur des fréquences fixes ou des fréquences variables,
- le calcul des phases associées aux impulsions en fonction de la PRM.

L'extraction des PRM peut mettre en œuvre toute méthode connue d'estimation de la période de répétition de motif, comme par exemple celle donnée dans le document de H.K. Mardia : "New techniques for the deinterleaving of repetitive sequences", qui comprend le calcul d'un histogramme *Hc* des DTOA associé aux impulsions. Cet histogramme est calculé pour chaque cellule $\tau$ selon la formule :

$$Hc(\tau) = \int_{t=\tau-Rt/2}^{t=\tau+Rt/2} \sum_{\substack{k,l \\ |t_k-t_l|<Tana \\ |k-l|<M}} \delta(t_k - t_l - t)dt$$

avec :

- $k$ et $l$ des indices des impulsions,
- $t_k$ le temps d'arrivée (TOA) de l'impulsion $k$,
- $t_l$ le temps d'arrivée (TOA) de l'impulsion $l$,
- $Tana$ la fenêtre d'analyse limitant la recherche des DTOA aux DTOA < $Tana$,
- $M$ l'ordre maximal auquel sont recherchés les DTOA, et
- $Rt$ la résolution temporelle de l'histogramme.

L'histogramme peut être seuillé pour supprimer les valeurs d'interaction, comme expliqué précédemment.

Pour chaque PRM (locale ou globale) détectée dans l'histogramme $Hc$ et pour les impulsions associées à cette PRM :

- la phase associée à la PRM et à l'impulsion est mesurée (la phase correspondant au reste de la division entière par la PRM de l'écart de temps entre l'instant d'arrivée de l'impulsion et une référence temporelle commune à toutes les impulsions),
- des trains d'impulsions monophase sont formés par analyse de la PRM et de la phase, les trains d'impulsions comprenant une suite d'impulsions successives sensiblement associées à une même phase et séparées deux à deux par un intervalle correspondant sensiblement à la PRM,

Ces sous-étapes peuvent être réalisées par exemple en suivant le procédé décrit dans le brevet EP 3.459.177 B1.

La tolérance sur la fourchette dans laquelle deux impulsions sont considérées comme associées à une même phase correspond à un choix d'implémentation dimensionné en fonction des taux de fausses alarmes et de non détections tolérés, et de la précision du capteur. La tolérance peut être liée à l'écart type $\sigma$ de la mesure de phase, par exemple en considérant comme ayant une même phase deux impulsions dont l'écart en phase n'excède pas 3 ou 4 $\sigma$.

L'écart de PRM toléré entre deux impulsions associées à un même train d'impulsions est directement lié à la taille des cellules de l'histogramme de PRM, qui résulte également d'un choix d'implémentation. Selon certaines variantes d'implémentation, les PRM peuvent être considérées comme sensiblement équivalentes lorsque les TDOA sont classées dans des cellules proches de l'histogramme.

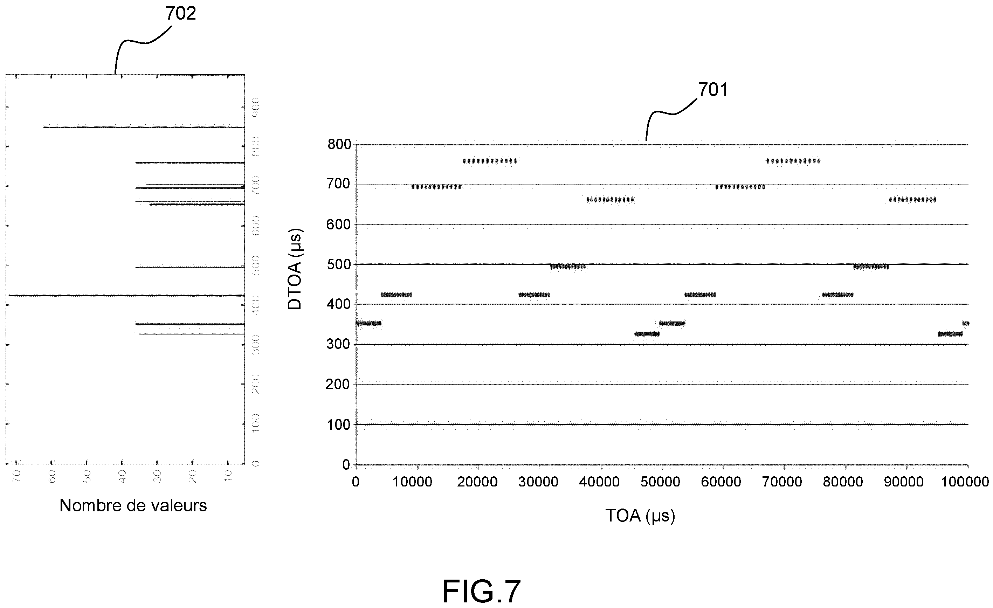

La figure 7 représente un graphique 701 des DTOA associés à une série d'impulsions, ainsi que l'histogramme seuillé 702 correspondant permettant d'extraire les PRM.

Avantageusement, cette étape du procédé de désentrelacement d'impulsions peut exploiter des contraintes de proximité sur les paramètres primaires, en DOA et/ou en fréquence par exemple, pour ne pas regrouper dans un même train des impulsions ne vérifiant pas ces contraintes de proximité.

Des contraintes de proximité, par exemple sur la direction d'arrivée et la fréquence radio, peuvent s'exprimer de la façon suivante dans le calcul de l'histogramme $Hc$ :

$$Hc(\tau) = \int_{t=\tau-Rt/2}^{t=\tau+Rt/2} \sum_{\substack{k,l \\ |t_k-t_l|<Tana \\ |k-l|<M \\ (C1)|DOA_k-DOA_l|<M_{DOA} \\ (C2)|f_k-f_l|<M_f}} \delta(t_k - t_l - t)dt$$

avec :

- $DOA_k$ la direction d'arrivée (DOA) de l'impulsion $k$,
- $DOA_l$ la direction d'arrivée (DOA) de l'impulsion $l$,
- $M_{DOA}$ une valeur maximale d'écart en DOA entre impulsions d'une même source,

- $f_k$ la fréquence radio de l'impulsion $k$,
- $f_l$ la fréquence radio de l'impulsion $l$,
- $M_f$ une valeur maximale d'écart en fréquence entre impulsions d'une même source.

A l'issue de cette étape 602, des trains d'impulsions monophase sont formés.

Le procédé selon l'invention comprend une étape 603 de caractérisation fine des paramètres des trains d'impulsion monophases formés lors de l'étape 602.

Cette étape peut se faire par moyennage des paramètres des impulsions associées à un train d'impulsions, par exemple en moyennant un ou plusieurs paramètres parmi la période de répétition des impulsions, la phase, la fréquence RF pour un radar à fréquence fixe ou les fréquences RF communes pour un radar à fréquence variable, les durées d'impulsions pour un radar à durée d'impulsions fixe ou les durées d'impulsions communes pour un radar à durées d'impulsions variables, la direction d'arrivée, etc., ...

Les mesures des PRM associées aux trains d'impulsions peuvent être affinées par balayage, comme décrit dans le brevet EP 3.459.177 B1.

Selon un premier mode de réalisation, adapté au cas de radars présentant un jitter (dérive de temps) cumulatif, la PRM fine $\hat{\tau}$ associée à un train de $n$ impulsions peut être obtenue en calculant :

$$\hat{\tau} = \frac{t_n - t_1}{n - 1},$$

avec $t_i$ l'instant d'arrivée de l'impulsion $i$. La variance var() associée vaut alors :

$$var(\hat{\tau}) = \frac{\sigma^2}{n - 1},$$

avec $\sigma$ l'écart type de la mesure des instants d'arrivée.

Selon un autre mode de réalisation, plus précis et adapté au cas de radars présentant des jitter non cumulatifs et aux radars stagger ou commutés, la PRM fine $\hat{\tau}$ associée à un train de $n$ impulsions peut obtenue en calculant pour chaque impulsion du train d'impulsions un indice entier $k(i) = \left\lfloor \frac{t_i}{\tau_g} \right\rfloor$, avec $t_i$ l'instant d'arrivée de l'impulsion $i$ et $\tau_g$ la valeur grossière de PRM associée au train d'impulsions lors de l'étape 602, l'opérateur $\lfloor \rfloor$ correspondant à la partie entière la plus proche de la division. La valeur fine de PRM peut alors être obtenue par :

$$\hat{\tau} = \sum_{i=1}^{n} \frac{6(2k(i) - k(n) - 1)}{k(n)(k(n)^2 - 1)} t_i.$$

La variance associée vaut alors :

$$var(\hat{\tau}) \approx \frac{12\sigma^2}{n^3 - n}.$$

Avantageusement, l'estimée de phase associée à un train d'impulsions peut être caractérisée finement en calculant $\hat{\phi} = \arg[S]$, avec

$$S = \sum_{j=1}^{n} \exp(i\phi_j t_j),$$

avec $t_j$ l'instant d'arrivée de l'impulsion $j$ et $\phi_j$ la phase de l'impulsion $j$ estimée lors de l'étape 602.

La variance associée vaut alors :

$$var(\widehat{\phi}) = -2\ln\left(\frac{1}{n}|S|\right).$$

La mesure des paramètres appliqués à un train d'impulsion plutôt qu'à une impulsion seule permet de caractériser ces paramètres avec un gain en précision très important par rapport à l'état de l'art. Pour chaque paramètre, le fait d'être moyenné sur l'ensemble des impulsions d'un train de $n$ impulsions permet de le caractériser avec une variance qui suit une loi en $\frac{1}{n}$, et donc une précision qui suit une loi en . Avantageusement, le paramètre de PRM d'un train périodique de n impulsions peut être calculé de manière à ce que sa variance suive une loi en $\frac{1}{n^3}$, donc avec une précision qui suit une loi en $\frac{1}{n\sqrt{n}}$, offrant ainsi un gain en précision d'un rapport $\frac{1}{n}$ par rapport à un simple moyennage, ce qui permet d'améliorer encore la capacité discriminante du procédé de désentrelacement. Par exemple, pour un train de 10 impulsions et un bruit de TOA de 2 µs d'écart type, la mise en œuvre du procédé selon un mode de réalisation de l'invention permet d'atteindre un écart type sur la PRM de 63 ns, ce qui offre une capacité de séparation des trains d'impulsions allant bien au-delà de celle des procédés connus, permettant de discriminer des trains d'impulsions que d'autres procédés auraient associés. Pour un train de 100 impulsions, ce pouvoir séparateur est de 2 ns.

Le procédé comprend ensuite une étape 604 d'association de trains d'impulsions afin de former des plots. On appelle plots des groupes de deuxième niveau correspondant à l'association des trains d'impulsions (groupes de premier niveau) déterminés lors de l'étape 602. Pour cela, des tests d'association sont réalisés sur les paramètres des trains d'impulsions calculées lors de l'étape 603, par exemple en mesurant des distances de Mahalanobis (par exemple sur les directions d'arrivées et la PRM) et avantageusement en appliquant des règles de regroupement. Si certains paramètres sont fortement variables (par exemple la fréquence, la durée des impulsions, ou la direction d'arrivée) à l'intérieur des groupes de deuxième niveau, ils peuvent ne pas être utilisés pour les décisions d'association.

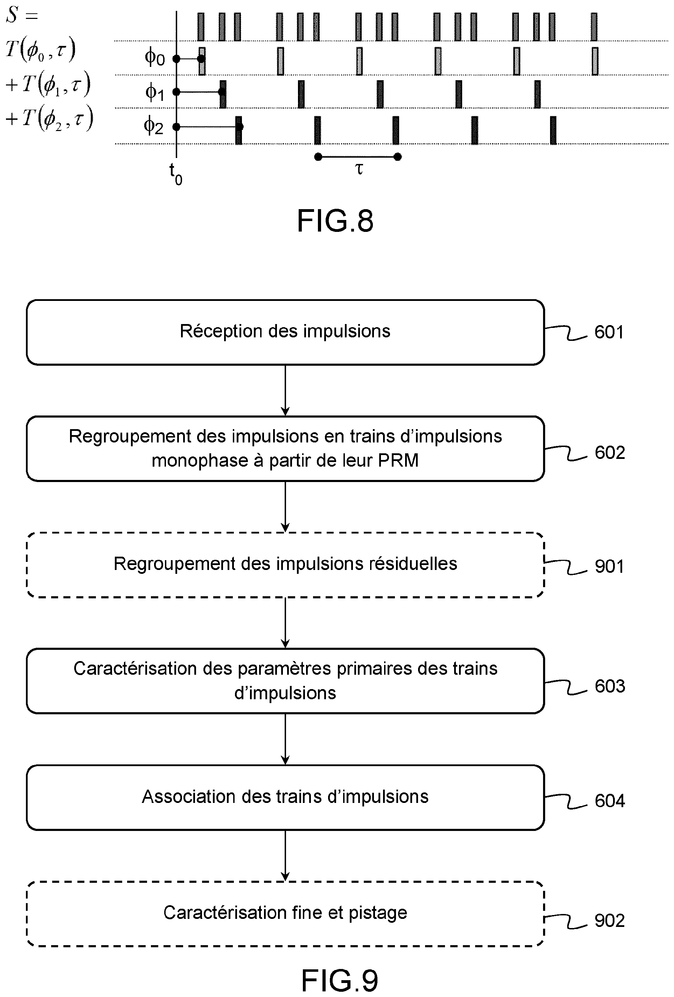

La figure 8 illustre la mise en œuvre d'un procédé de désentrelacement d'impulsions selon un mode de réalisation de l'invention, lorsque les impulsions reçues proviennent d'un radar de type stagger 3/3. Les procédés de l'état de l'art, comme par exemple celui décrit dans le brevet Européen EP 3.051.611 B1 associeraient l'ensemble des impulsions dans un même train d'impulsions puisque les PRM $\tau$ mesurées sont identiques pour les trois phases du radar stagger. Cependant, les trains peuvent provenir de radars différents ayant une PRM proche, ce que ne permettent pas de distinguer les procédés selon l'état de l'art sur caractéristiques primaires ou secondaires prépondérantes.

Le procédé selon l'invention permet d'identifier trois trains d'impulsions $T(\phi_i, \tau)$ associés chacun à une phase $\phi_i$ particulière, la phase correspondant au reste de la division entière par la PRM $\tau$ de l'écart de temps entre chaque impulsion et une référence temporelle $t_0$, dont les paramètres sont ensuite estimés finement en considérant l'ensemble du train d'impulsions. Un test d'association en PRM, impliquant par exemple le calcul d'une distance de Mahalanobis ou toute autre mesure de distance, permet de déterminer avec une précision élevée si les trois trains d'impulsions proviennent d'un même radar à plusieurs composantes ou de différents radars. Par exemple, si les valeurs de PRM des trains d'impulsions sont sous six écarts type, ces trains d'impulsions sont associés pour former un plot. A l'inverse, si les valeurs de PRM de ces deux groupes sont séparées de plus de six écarts types, ces trains sont attribués à des plots distincts.

Le test d'association peut être réalisé en mesurant une distance en PRM et/ou un ou plusieurs des paramètres estimés à l'étape 603, comme par exemple un test d'association en PRM et DOA, en DOA et en fréquence, etc., ...

En règle générale, la mesure de proximité doit tenir compte d'un maximum de liens entre les impulsions, utilisant pour cela les paramètres primaires (fréquence, DI, amplitude, paramètres intra-impulsion, ...) et les paramètres secondaires (PRI, PRM, PRA (période de rotation d'antenne), ...). Le brevet Européen EP 3.049.822 B1 donne un exemple de construction d'une note entre impulsions. Avantageusement, différentes mesures peuvent être construites, utilisant différents paramètres permettant de construire une note adaptée à différents types de radars (par exemple, le paramètre de fréquence est adapté pour la détection d'un radar monofréquence mais pas d'un radar agile en fréquence).

Des règles de regroupement spécifiques peuvent également être mises en œuvre. Par exemple, une règle de regroupement peut consister à associer des trains d'impulsions consécutifs reçus sur des fréquences différentes lorsqu'ils forment un pont de DTOA.

En effet, lorsqu'il n'y a pas de mitage (trou) entre les paliers d'impulsions, comme par exemple entre les paliers d'impulsions 311 et 312 sur la figure 3, le DTOA entre la dernière impulsion du palier N et la première impulsion du palier N+1 est égale au DTOA du palier N+1. Dans ce cas, les paliers peuvent être regroupés au sein d'un même plot.

Dans une variante, un temps de commutation entre paliers peut être pris en compte, en posant $DTOA_{ij} = DTOA_i +$ temps de commutation, afin d'associer des paliers d'impulsions, et observant si le temps de commutation se reproduit entre différents paliers d'impulsions.

En présence de mitage dans un palier d'impulsions, c'est-à-dire lorsque la réception d'un palier d'impulsion est interrompue par la non réception de certaines impulsions, il est possible de calculer un point de rencontre en TOA entre les deux trains d'impulsions formés en prolongeant les paliers par leur PRI, afin de regrouper les deux trains d'impulsions au sein d'un même plot.

Le procédé de désentrelacement d'impulsions selon l'invention utilise donc la propriété de périodicité des formes d'ondes radar, information fondamentale insuffisamment exploitée par les procédés de l'art antérieur, en considérant conjointement les intervalles de répétition des motifs et les phases associées à ces intervalles de répétition. Il réalise le désentrelacement des impulsions radars en mettant en tête de traitement la recherche de groupes d'impulsions à PRM (ou SPRM) et phase constante (à une marge d'erreur près). Par nature, ce procédé est robuste à l'agilité fréquentielle des impulsions d'une même forme d'onde radar, et au mitage (non réception d'une ou plusieurs impulsions dans un train d'impulsions). L'association des groupes à PRM constante et monophasée permet la meilleure discrimination possible entre signaux synchronisés (par exemple les différents paliers d'un radar stagger) et signaux non synchronisés (deux formes d'onde à PRM proche).

Le regroupement des impulsions est réalisé sur des trains d'impulsions, et non sur des impulsions, ce qui permet d'augmenter significativement la puissance des tests d'association basés sur une distance, par exemple une distance de type Mahalanobis. Le procédé selon l'invention apporte ainsi la garantie que le groupement d'impulsions réalisé ne peut être le fruit du hasard, du moins pour des mesures de TOA suffisamment précises (100ns par exemple). Le procédé tire profit de ce que, sur des formes d'onde périodiques ou cycliques, le test de ségrégation est plus puissant lorsqu'il est réalisé sur des trains d'impulsions plutôt que sur les impulsions seules.

En outre, le procédé selon l'invention apporte un gain en temps de traitement, puisque le calcul de DTOA peut être réalisé à un ordre plus faible que pour les méthodes de désentrelacement vectorielles. En reprenant l'exemple illustré à la figure 7, la mise en œuvre d'un procédé de désentrelacement vectoriel requiert la construction de DTOA allant au moins jusqu'à l'ordre 76 car la PRM est d'ordre 76, tandis que la mise en œuvre du procédé de désentrelacement selon l'invention peut se faire en construisant des DTOA d'ordre 1 seulement. Les trains d'impulsions sont ensuite regroupés à partir de leurs caractéristiques. Le procédé selon l'invention permet donc d'atteindre la performance d'un traitement vectoriel pour un coût mémoire et un coût de calcul moindre.

En pratique, l'ordre auquel doivent être calculés les DTOA est lié au nombre de signaux radars entrelacés. Typiquement, le procédé de désentrelacement selon l'invention peut être mis en œuvre en calculant des DTOA d'ordre 5 dans un très grand nombre de configurations opérationnelles.

La figure 9 représente les différentes étapes d'un mode de réalisation particulier du procédé de désentrelacement selon l'invention dans lequel figurent des étapes supplémentaires avantageuses. Ces étapes supplémentaires peuvent être mises en œuvre indépendamment ou ensemble.

Parmi ces étapes figure une étape 901 de regroupement des impulsions n'ayant pas été associées à des trains d'impulsions lors de l'étape 602. Cette étape consiste à regrouper les impulsions résiduelles, qui ne forment pas de train cyclo-stationnaire à l'échelle de la fenêtre d'analyse, dans des groupes en fonction de leurs caractéristiques primaires (par exemple la direction d'arrivée et/ou la fréquence), selon une méthode classique de regroupement par paramètres primaires. Ces groupes d'impulsions résiduelles peuvent être pris en compte lors des étapes 603 et 604 du procédé, en estimant leurs paramètres caractéristiques.

Dans une variante d'implémentation, le regroupement 901 est réalisé par le calcul d'une note de proximité entre impulsions sur les paramètres primaires (par exemple la fréquence, la durée d'impulsion, la direction d'arrivée, ...) et/ou secondaires (par exemple la DTOA) des impulsions.

L'étape supplémentaire 901 permet de prendre en compte, dans le procédé de désentrelacement selon l'invention, l'ensemble des impulsions dans des mélanges de signaux comprenant des formes d'onde cyclostationnaires et des formes d'onde non cyclostationnaires.

Selon le mode de réalisation, le procédé de désentrelacement d'impulsions selon l'invention peut comprendre une étape 902 de caractérisation fine des paramètres des groupes de trains d'impulsions, et de pistage des impulsions.

Pour ceci, une fois les plots créés, il est possible d'estimer très précisément les paramètres de ces groupes d'impulsions, de manière similaire à ce qui est réalisé à l'étape 603 mais pour un ensemble de trains d'impulsions, améliorant par là même encore la précision des estimées. Ces paramètres estimés finement peuvent être utilisés de manière à réaliser le pistage des impulsions reçues.

En aval du désentrelacement, une fonction de pistage a pour objectif d'assurer le suivi des modes des émissions au cours des cycles d'interception successifs à partir de la caractérisation des trains d'impulsions réalisée en amont. Cette fonction de pistage, connue de l'homme du métier, réalise généralement :

- l'association des plots issus du désentrelacement à des pistes, ou la création de nouvelles pistes lorsque c'est nécessaire,

- la mise à jour de la caractérisation des pistes à partir des paramètres des impulsions ajoutées au fur et à mesure aux plots.

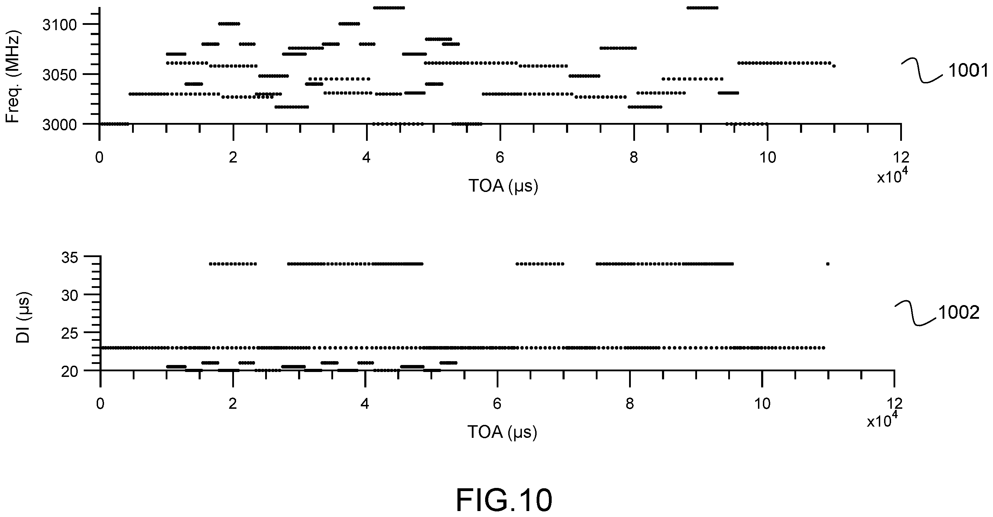

De manière à simplifier la compréhension du procédé de désentrelacement d'impulsions selon l'invention, les figures 3, 4, 7 et 8 représentent des impulsions en provenance d'un unique radar. Les figures 10 à 12 illustrent la mise en œuvre du procédé selon l'invention dans le cas d'impulsions émises par plusieurs radars.

La figure 10 représente des impulsions reçues par un capteur ESM en provenance de plusieurs sources. Ces impulsions sont représentées par rapport à leur fréquence dans le graphique 1001 et à leur durée d'impulsion dans le graphique 1002. A ce stade, les impulsions des différents radars sont entrelacées.

L'étape 602 du procédé selon l'invention consiste à regrouper les impulsions dans des trains d'impulsions sur DTOA grâce à la détection des périodes de répétition de motif locales ou globales des formes d'ondes présentes, et à la phase des impulsions au regard de la période de répétition de motif.

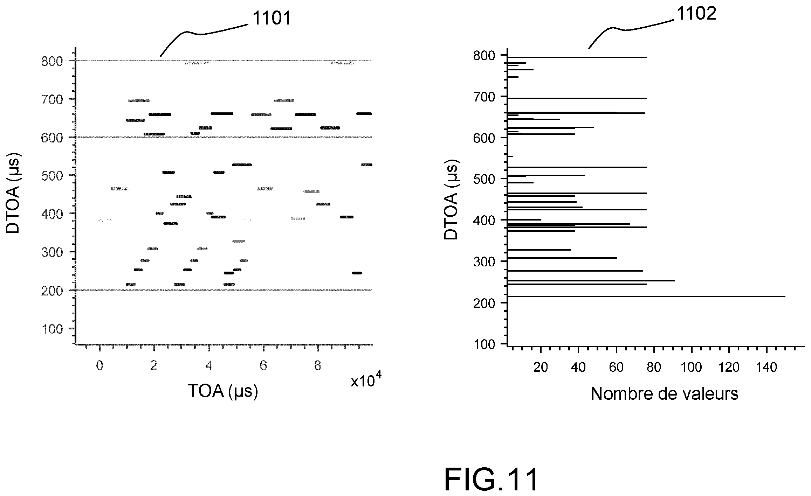

Une manière de mettre en œuvre cette étape consiste à dresser un histogramme des DTOA, et à associer au sein d'un même train les impulsions présentant sensiblement la même DTOA lorsqu'elles correspondent sensiblement à une même phase. La figure 11 représente un graphique 1101 des DTOA d'ordre 5 construit à partir des impulsions de la figure 10, ainsi que l'histogramme 1102 associé. Après seuillage, cet histogramme permet d'identifier les PRM (locales ou globales), et d'associer les impulsions en fonction de ces PRM. Sur le graphique 1101, les niveaux de gris représentent des TDOA associées à une même PRM.

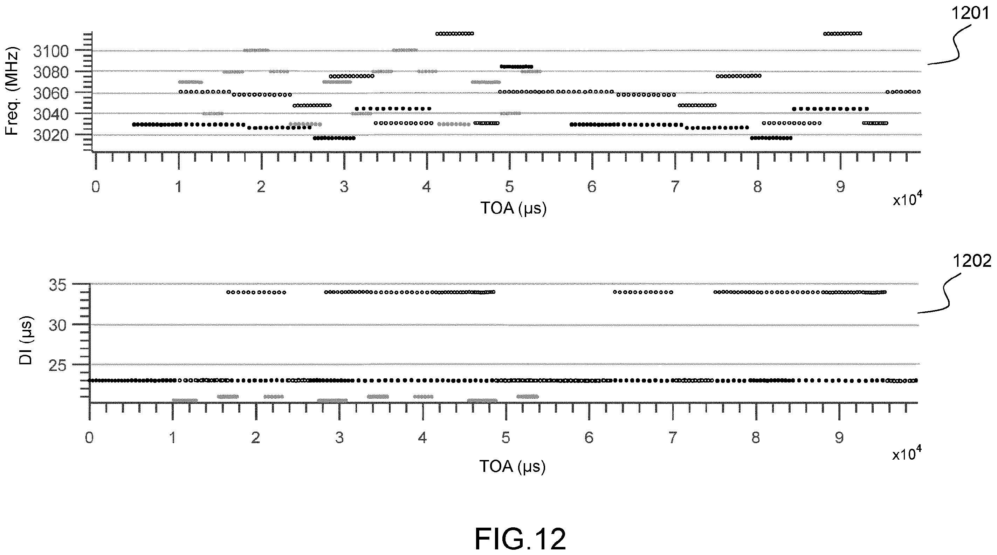

Enfin, l'étape 604 du procédé selon l'invention permet d'associer les trains d'impulsions entre eux, en mesurant les distances entre les trains d'impulsions. Ces distances sont très précises puisque les paramètres des trains d'impulsions ont été estimés finement sur l'ensemble du train. La figure 12 représente en ronds gris, en ronds noir et en ronds blanc bordé de noir les différents plots formés par le procédé de désentrelacement selon l'invention sur les impulsions de la figure 10. Dans ce cas précis, le procédé de désentrelacement selon l'invention a permis de regrouper les impulsions en trois plots correspondant à trois radars différents. Ces impulsions sont représentées en temps sur le graphique 1201 et en durée d'impulsion sur le graphique 1202.

Les principaux avantages du procédé sont donc :

- l'utilisation en tête de traitement d'un groupement exploitant la répétition et la cyclostationnarité des formes d'ondes, et permettant ainsi une séparation optimale des formes d'ondes en présence,

- l'association par la suite de groupes d'impulsions de premier niveau par des tests d'association,

- la possibilité d'associer des trains d'impulsions à partir des sous-PRM seulement, ce qui rend le procédé efficace même sur des périodes d'observation courtes,

- la faible complexité des opérations réalisées, en particulier les mesures de DTOA qui se font à des ordres faibles, ce qui rend le procédé selon l'invention peu coûteux à implémenter et rapide,

- la possibilité de choisir les paramètres permettant d'associer au mieux les trains d'impulsions, qui peuvent être adaptés aux capacités du capteur (par exemple les capacités de discrimination en direction d'arrivée).

**Revendications**

1. Procédé de désentrelacement d'une série d'impulsions comprenant :

   - une étape (601) de réception d'une série d'impulsions, le procédé étant **caractérisé en ce qu'**il comprend en outre :

      - une étape (602) de détermination de périodes de répétition de motifs et de phases associées aux impulsions, par construction d'un histogramme de différence de temps d'arrivées entre les impulsions, et de regroupement des impulsions dans des trains d'impulsions à période de répétition de motif et phase sensiblement constantes,
      - une étape (603) de caractérisation des paramètres des trains d'impulsions,
      - une étape (604) de formation de groupes de trains d'impulsions à partir des paramètres des trains d'impulsions.

2. Procédé de désentrelacement selon la revendication 1, dans lequel l'étape (602) de détermination de périodes de répétition de motifs et de phases associées aux impulsions comprend l'application d'une contrainte de proximité sur des paramètres primaires des impulsions.

**3.** Procédé de désentrelacement selon l'une des revendications précédentes, dans lequel l'étape (603) de caractérisation des paramètres des trains d'impulsions comprend la mesure d'un ou plusieurs paramètres à partir de l'ensemble des impulsions du train d'impulsions parmi lesquels une période de répétition de motif, une phase, une direction d'arrivée, une ou plusieurs fréquences de réception, une amplitude et une ou plusieurs durées d'impulsions.

**4.** Procédé de désentrelacement selon la revendication 3 dans lequel l'étape (603) de caractérisation des paramètres des trains d'impulsions comprend le calcul d'une période de répétition de motif associée au train d'impulsions selon la formule :

$$\hat{\tau} = \sum_{i=1}^{n} \frac{6(2k(i) - k(n) - 1)}{k(n)(k(n)^2 - 1)} t_i$$

avec $\hat{\tau}$ ladite période de répétition de motif associée au train d'impulsions, $k(i)$ un indice entier de l'impulsion i dans le train d'impulsion, $t_i$ l'instant d'arrivée de l'impulsion $i$ et $n$ le nombre d'impulsions du train d'impulsions.

**5.** Procédé de désentrelacement selon l'une des revendications précédentes, dans lequel l'étape (604) de formation de groupes de trains d'impulsions comprend la mesure de distances entre les paramètres des trains d'impulsion.

**6.** Procédé de désentrelacement selon l'une des revendications précédentes, dans lequel l'étape (604) de formation de groupes de trains d'impulsions comprend l'application de règles de regroupement entre les trains d'impulsions permettant d'associer des séries d'impulsions formant des ponts de DTOA et/ou des séries d'impulsions interrompues.

**7.** Procédé de désentrelacement selon l'une des revendications précédentes, comprenant en outre une étape (901) de regroupement à partir de caractéristiques primaires des impulsions n'ayant pas été associées à des trains d'impulsions lors de l'étape (602) de regroupement des impulsions dans des trains d'impulsions à période de répétition de motif et phase sensiblement constantes.

**8.** Procédé de désentrelacement selon l'une des revendications précédentes, comprenant en outre une étape (902) de caractérisation des paramètres des groupes de trains d'impulsions et de pistage des impulsions.

**9.** Dispositif comprenant :

- des moyens (501, 502) de réception, d'acquisition et de numérisation de signaux radiofréquence,

et **caractérisé en ce qu'**il comprend en outre :

- des moyens (503) de traitement numérique des signaux reçus configurés pour mettre en œuvre un procédé de désentrelacement d'impulsions selon l'une des revendications 1 à 8.

**10.** Programme d'ordinateur **caractérisé en ce qu'**il comprend des instructions de code de programme pour l'exécution du procédé selon l'une des revendications 1 à 8 lorsque ledit programme est exécuté sur un ordinateur.

**Patentansprüche**

**1.** Verfahren zum Entschachteln einer Impulsfolge, umfassend:

- einen Schritt (601) des Empfangens einer Impulsfolge, **dadurch gekennzeichnet, dass** das Verfahren weiter umfasst:

- einen Schritt (602) des Bestimmens von Musterwiederholungsperioden und von mit den Impulsen zugeordneten Phasen, durch Erstellung eines Histogramms der Ankunftszeitdifferenzen zwischen den Impulsen, und des Gruppierens der Impulse in Impulszüge mit im Wesentlichen konstanter Musterwiederholungsperiode und Phase,
- einen Schritt (603) des Charakterisierens der Parameter der Impulszüge,

- einen Schritt (604) des Bildens von Gruppen von Impulszügen aus den Parametern der Impulszüge.

2. Verfahren zum Entschachteln nach Anspruch 1, wobei der Schritt (602) des Bestimmens von Musterwiederholungsperioden und von mit den Impulsen zugeordneten Phasen das Anwenden einer Näherungsbedingung auf primäre Parameter der Impulse umfasst.

3. Verfahren zum Entschachteln nach einem der vorhergehenden Ansprüche, wobei der Schritt (603) des Charakterisierens der Parameter der Impulszüge das Messen eines oder mehrerer Parameter aus der Gesamtheit der Impulse des Impulszuges umfasst, darunter eine Musterwiederholungsperiode, eine Phase, eine Ankunftsrichtung, eine oder mehrere Empfangsfrequenzen, eine Amplitude und eine oder mehrere Impulsdauern.

4. Verfahren zum Entschachteln nach Anspruch 3, wobei der Schritt (603) des Charakterisierens der Parameter der Impulszüge das Berechnen einer dem Impulszug zugeordneten Musterwiederholungsperiode gemäß der folgenden Formel umfasst:

$$\hat{t} = \sum_{i=1}^{n} \frac{6(2k(i) - k(n) - 1)}{k(n)(k(n)^2 - 1)} t_i$$

wobei $\hat{t}$ die dem Impulszug zugeordnete Musterwiederholungsperiode ist, $k(i)$ ein ganzzahliger Index des Impulses $i$ im Impulszug, $t_i$ der Ankunftszeitpunkt des Impulses $i$ und n die Anzahl der Impulse im Impulszug ist.

5. Verfahren zum Entschachteln nach einem der vorhergehenden Ansprüche, wobei der Schritt (604) des Bildens von Gruppen von Impulszügen das Messen von Abständen zwischen den Parametern der Impulszüge umfasst.

6. Verfahren zum Entschachteln nach einem der vorhergehenden Ansprüche, wobei der Schritt (604) des Bildens von Gruppen von Impulszügen das Anwenden von Gruppierungsregeln zwischen den Impulszügen umfasst, die es ermöglichen, Impulsfolgen, die DTOA-Brücken bilden, und/oder unterbrochene Impulsfolgen zuzuordnen.

7. Verfahren zum Entschachteln nach einem der vorhergehenden Ansprüche, wobei das Verfahren weiter umfasst einen Schritt (901) des Gruppierens ausgehend von primären Merkmalen der Impulse, die während des Schrittes (602) des Gruppierens der Impulse in Impulszüge mit im Wesentlichen konstanter Musterwiederholungsperiode und Phase nicht Impulszügen zugeordnet wurden.

8. Verfahren zum Entschachteln nach einem der vorhergehenden Ansprüche, wobei das Verfahren weiter umfasst einen Schritt (902) des Charakterisierens der Parameter der Gruppen von Impulszügen und des Trackings der Impulse.

9. Vorrichtung, umfassend:

- Mittel (501, 502) zum Empfangen, Erfassen und Digitalisieren von Hochfrequenzsignalen,

und **dadurch gekennzeichnet, dass** sie weiter umfasst:

- Mittel (503) zur digitalen Verarbeitung der empfangenen Signale, die konfiguriert sind, ein Verfahren zum Entschachteln von Impulsen nach einem der Ansprüche 1 bis 8 zu implementieren.

10. Computerprogramm, **dadurch gekennzeichnet, dass** es Programmcodeanweisungen zur Ausführung des Verfahrens nach einem der Ansprüche 1 bis 8 umfasst, wenn das Programm auf einem Computer ausgeführt wird.


**Claims**

1. Method for deinterleaving a pulse sequence comprising:

- a receiving step (601) of a pulse sequence, the method being **characterized in that** it further comprises:

- a step (602) of determining regular pattern repetition periods and phases associated with the pulses, by the construction of a histogram plotting the interval of arrival times between the pulses and the regrouping of the pulses into pulse trains having substantially constant pattern repetition periods and phases.
- a step (603) of characterizing the parameters of the pulse trains,
- a step (604) of forming groups of pulse trains based on the pulse train parameters.

2. The method for deinterleaving according to claim 1, wherein the step (602) of determining regular pattern repetition periods and phases associated with the pulses comprises the application of an obligation of proximity in the primary pulse parameters.

3. The method for deinterleaving according to one of the preceding claims, wherein the step (603) of characterizing the parameters of the pulse trains comprises the measure of one or several parameters based on the set of pulses of the pulse train, including one pattern repetition period, one phase, one direction of arrival, one or several receiving frequencies, one amplitude, and one or several pulse durations.

4. The method for deinterleaving according to claim 3 wherein the step (603) of characterizing the parameters of the pulse trains comprises the calculation of a pattern repetition period associated with the pulse train according to the formula:

$$\hat{t} = \sum_{i=1}^{n} \frac{6(2k(i) - k(n) - 1)}{k(n)(k(n)^2 - 1)} t_i$$

with $\hat{\tau}$ said pattern repetition period associated with the pulse train, $k(i)$ an integer index of the pulse $i$ within the pulse train, $t_i$ the moment the pulse arrives $i$ and $n$ the number of pulses in the pulse train.

5. The method for deinterleaving according to one of the preceding claims, wherein the step (604) of forming groups of pulse trains comprises the measure of distances between the pulse train parameters.

6. The method for deinterleaving according to one of the preceding claims, wherein the step (604) of forming groups of pulse trains comprises the application of regrouping rules between the pulse trains allowing to associate pulse sequences forming DTOA bridges and/or interrupted pulse sequences.

7. The method for deinterleaving according to one of the preceding claims, further comprising a regrouping step (901) based on the primary characteristics of the pulses that were not associated with pulse trains during the step (602) of regrouping the pulses into pulse trains with substantially constant pattern repetition periods and phases.

8. The method for deinterleaving according to one of the preceding claims, further comprising a step (902) of characterizing the parameters of the groups of pulse trains and pulse tracking.

9. A device comprising:

- means (501, 502) of reception, acquisition and digitization of radio frequency signals,

and **characterized in that** it further comprises:

- means (503) for digitally processing the signals received configured to implement a method for deinterleaving pulses according to one of claims 1 to 8.

10. A computer program **characterized in that** it comprises program code instructions for carrying out the method according to one of claims 1 to 8, when said program is executed on a computer.

FIG.1

FIG.2

FIG.3a

FIG.3b

EP 4 305 446 B1

FIG.4

FIG.5

| Réception d'une série d'impulsions | 601 |
| Regroupement des impulsions en trains d'impulsions monophase à partir de leur PRM | 602 |
| Caractérisation des paramètres des trains d'impulsions | 603 |
| Association des trains d'impulsions | 604 |

FIG.6

FIG.7

$$S =$$
$$T(\phi_0, \tau)$$
$$+ T(\phi_1, \tau)$$
$$+ T(\phi_2, \tau)$$

## FIG.8

| | |
|---|---|
| Réception des impulsions | 601 |
| Regroupement des impulsions en trains d'impulsions monophase à partir de leur PRM | 602 |
| Regroupement des impulsions résiduelles | 901 |
| Caractérisation des paramètres primaires des trains d'impulsions | 603 |
| Association des trains d'impulsions | 604 |
| Caractérisation fine et pistage | 902 |

## FIG.9

FIG.10

FIG.11

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2309289 A1
- US 2015263872 A1
- EP 3505949 A1
- FR 3051611 B1
- EP 3049822 B1
- EP 3459177 B1
- EP 3051611 B1

**Littérature non-brevet citée dans la description**

- **WILKINSON D.R.** ; **WATSON A.W.** Use of metric techniques in ESM data processing. *IEE Proceedings F*, 1985, vol. 132 (7), 27-36
- **H. K. MARDIA**. Adaptive multi-dimensional clustering for ESM. *IEE Colloquium on « Signal processing for ESM systems »*, 1988
- **XIN et al.** A fast and real-time PRI transformation algorithm for deinterleaving Large PRI jitter signals. *37th Chinese control conference, technical committee on control theory, Chinese association of automation*, 2018
- **H.K. MARDIA**. New techniques for the deinterleaving of repetitive sequences. *IEE Proceedings F*, August 1989, vol. 136 (4), 149-154